# EUROPÄISCHE PATENTSCHRIFT

(11) **EP 3 792 507 B1**
(45) Veröffentlichungstag und Bekanntmachung des Hinweises auf die Patenterteilung: **10.07.2024**
(21) Anmeldenummer: 19197576.2
(22) Anmeldetag: 16.09.2019
(51) Int. Cl.: F16B 15/08, F16B 1/00

(54) **NAGELSTREIFEN MIT RFID-TRANSPONDERN UND HERSTELLUNGSVERFAHREN**
NAIL STRIP WITH RFID TRANSPONDERS AND METHOD OF MAKING
BANDES DE CLOUS POURVUE DE TRANSPONDEURS RFID ET PROCÉDÉ DE FABRICATION

(43) Veröffentlichungstag der Anmeldung: 17.03.2021
(73) Patentinhaber: BeA GmbH, 22926 Ahrensburg (DE)
(72) Erfinder: THEBERATH, Martin, 22889 Tangstedt (DE); FISCHER-ZERNIN, Jakob, 20099 Hamburg (DE); BAUER, Joachim, 23843 Bad Oldesloe (DE)
(74) Vertreter: Cohausz & Florack

(56) Entgegenhaltungen:
- EP-A1- 3 510 858
- EP-A2- 0 278 934
- WO-A1-2016/188918
- DE-A1- 2 250 375
- JP-U- S5 518 625

## Beschreibung

Nägel und Klammern zur Verarbeitung mit einem Eintreibwerkzeug dienen zumeist als Verbindungsmittel, etwa beim Anheften von Stoffen im Möbelbau oder der Montage von Holzwänden für Fertighäuser. Zur einfachen Verarbeitung können mehrere Klammern zu einem Klammerstab und mehrere Nägel zu einem Nagelstreifen verbunden und in dieser Form in ein Magazin eines Eintreibwerkzeugs eingesetzt werden.

Darüber hinaus werden spezielle Nägel und Klammern zur Kennzeichnung von Gegenständen eingesetzt. Bekannt ist beispielsweise eine Kennzeichnung von Paletten mit Klammern, die einen Farbcode und/oder eine besondere Prägung aufweisen. Ebenfalls bekannt ist eine maschinell lesbare Kennzeichnung von Gegenständen mithilfe von Nägeln, die einen RFID-Transponder aufweisen.

Aus der Druckschrift EP 2 816 508 A2 ist ein Nagel zum Eintreiben in Holz bekannt geworden, der eine flache Grundform aufweist und mit einem RFID-Transponder versehen ist. Mehrere dieser Nägel sollen zur Verarbeitung mit einem Eintreibwerkzeug magazinartig aufeinander gestapelt werden können.

Aus der Druckschrift WO 2016/188918 A1 ist ein Nagelstreifen bekannt geworden, dessen Nägel jeweils mit einem RFID-Transponder versehen sind. Die Herstellung der Nagelstreifen erfolgt in einem Spritzgießverfahren, bei dem die RFID-Transponder in das Kunststoffmaterial der Nägel eingebettet werden. Die die Nägel bildenden Bereiche sind dann über Stege miteinander verbunden. Die Dokumente WO 2016/188918 A1, EP 3 510 858 A1, EP 0 278 934 A2, JP S55 18625 U und DE 22 50 375 A1 stellen weiteren Stand der Technik dar.

Davon ausgehend ist es die Aufgabe der Erfindung, einen Nagelstreifen zur Verfügung zu stellen, der kostengünstig herstellbar ist und eine besonders zuverlässige Kennzeichnung von Gegenständen erlaubt, sowie ein Verfahren zu Herstellung eines solchen Nagelstreifens.

Diese Aufgabe wird gelöst durch den Nagelstreifen mit den Merkmalen des Anspruchs 1 und durch das Verfahren mit den Merkmalen des Anspruchs 15. Vorteilhafte Ausgestaltungen sind in den Unteransprüchen angegeben.

Der Nagelstreifen ist zur Verarbeitung mit einem Eintreibwerkzeug bestimmt und umfasst:
- eine Vielzahl von Nägeln, die jeweils mit einem RFID-Transponder versehen sind, und
- Verbindungsmittel zur Verbindung der Nägel zu dem Nagelstreifen, wobei
- die Verbindungsmittel dazu ausgebildet sind, die Verbindung der Nägel zu dem Nagelstreifen herzustellen, nachdem die mit den RFID-Transpondern versehenen Nägel auf die Funktionsfähigkeit der RFID-Transponder hin geprüft und diejenigen Nägel ausgewählt worden sind, die einen funktionsfähigen RFID-Transponder aufweisen.

Das Eintreibwerkzeug kann ein Nagler sein, mit dem ein einzelner Nagel sehr schnell, in der Regel innerhalb weniger Millisekunden, eingetrieben werden kann, insbesondere ein Druckluftnagler, ein Gasnagler oder ein Nagler mit einem elektrischen Antrieb. Es kann jedoch ebenso gut ein sogenannter Pusher sein, insbesondere ein stationäres Gerät, mit dem die einzelnen Nägel in das jeweilige Werkstück eingepresst werden. Der Nagelstreifen ist zur Verarbeitung mit einem solchen Eintreibwerkzeug bestimmt, d. h. die einzelnen Nägel sind derart zu dem Nagelstreifen verbunden, dass der Nagelstreifen einfach handhabbar ist und in ein Magazin oder eine sonstige Aufnahme des Eintreibwerkzeugs eingesetzt werden kann. Hierzu kann der Nagelstreifen insbesondere ein geradliniger Stab mit beispielsweise 10 bis 100 Nägeln sein. Einbezogen sind jedoch auch aufrollbare Nagelstreifen, häufig bezeichnet als Coils.

Die Nägel können eine längliche Grundform aufweisen mit einem vorderen Ende und einem hinteren Ende. Am vorderen Ende kann eine Spitze angeordnet sein, beispielsweise eine Diamant- oder Meißelspitze. Die Spitze kann jedoch auch stumpf und/oder mehr oder weniger stark abgerundet ausgebildet sein. Die Nägel können einen zylindrischen oder annähernd zylindrischen Schaftabschnitt aufweisen, dessen Querschnitt beispielsweise kreisförmig oder oval oder rechteckig/quadratisch, auch mit abgerundeten Ecken, sein kann. Die Nägel bzw. Grundkörper der Nägel können zum Beispiel aus einem Kunststoffmaterial bestehen, insbesondere aus ABS-Kunststoff (Acrylnitril-Butadien-Styrol) oder aus einem faserverstärkten Kunststoffmaterial.

Der RFID-Transponder kann eine Sende- und Empfangsantenne und einen elektronischen Schaltkreis aufweisen. Der elektronische Schaltkreis kann einen nicht wiederbeschreibbaren Speicher (Festwertspeicher, read-only-memory/ROM) aufweisen, in dem eine individuelle, den Transponder eindeutig kennzeichnende Codierung gespeichert sein kann. Darüber hinaus kann der elektronische Schaltkreis einen wiederbeschreibbaren Speicher aufweisen, in dem ein Benutzer weitere Daten speichern kann. Bei dem RFID-Transponder kann es sich um eine passive Sende- und Empfangseinrichtung ohne eigene Energieversorgung handeln. Alternativ kann ein aktiver RFID-Transponder mit eigener Energieversorgung eingesetzt werden.

Jedem Nagel ist ein RFID-Transponder zugeordnet, der beim Eintreiben des Nagels in ein Werkstück an dem Werkstück befestigt, insbesondere in das Werkstück eingebracht wird. Der RFID-Transponder kann hierzu innerhalb eines Nagelgrundkörpers angeordnet sein, beispielsweise indem er in ein Kunststoffmaterial des Nagelgrundkörpers eingebettet oder in eine darin ausgebildete Aufnahme/einen darin ausgebildeten Aufnahmeraum eingesetzt ist.

Eine Besonderheit der Erfindung besteht darin, dass Verbindungsmittel zur Verbindung der Nägel zu einem Nagelstreifen dazu ausgebildet sind, die Verbindung in einem gesonderten Herstellungsschritt herzustellen, nämlich nachdem die mit den RFID-Transpondern versehenen Nägel auf die Funktionsfähigkeit der RFID-Transponder hin geprüft und diejenigen Nägel ausgewählt worden sind, die einen funktionsfähigen RFID-Transponder aufweisen. Dadurch wird erreicht, dass alle in den Nagelstreifen aufgenommenen Nägel einen funktionsfähigen RFID-Transponder aufweisen.

Die Erfindung beruht auf der Erkenntnis, dass die RFID-Transponder relativ empfindliche Bauelemente sind, die schon bei der Herstellung der einzelnen Nägel beschädigt werden können. Dies gilt insbesondere, wenn die RFID-Transponder erhöhten Temperaturen ausgesetzt werden, etwa bei einer Einbettung der RFID-Transponder in die Nägel zum Beispiel im Spritzgießverfahren. Auch bei einer vermeintlich schonenderen Handhabung der RFID-Transponder bei der Herstellung der einzelnen Nägel kann es jedoch zu Ausfällen kommen. Die Aufnahme schon eines einzigen Nagels, dessen RFID-Transponder nicht voll funktionsfähig ist, in einen Nagelstreifen macht in der Regel den gesamten Nagelstreifen unbrauchbar, weil eine zuverlässige Kennzeichnung nicht möglich ist. Schon bei einer geringen Fehlerquote der einzelnen Nägel führt dies zu einem wirtschaftlich problematischen Anteil von Ausschuss. Abhilfe schaffen die speziellen Verbindungsmittel der Nagelstreifen, die eine Qualitätskontrolle jedes einzelnen Nagels ermöglichen, bevor ausschließlich die für gut befundenen Nägel zu dem Nagelstreifen verbunden werden.

Erfindungsgemäß umfassen die Verbindungsmittel eine Vielzahl von Verbindungselementen, von denen jeder Nagel mindestens eines aufweist. Grundsätzlich können die Nägel auch ausschließlich mit von den Nägeln verschiedenen Verbindungsmitteln verbunden werden, beispielsweise mit einem Draht oder einem Streifen aus Kunststoff oder Papier, der mit den Nägeln verklebt oder verschweißt wird. Demgegenüber bietet eine Ausrüstung der Nägel mit jeweils mindestens einem Verbindungselement den Vorteil, dass alle Nägel bereits zur Verbindung zu einem Nagelstreifen vorbereitet sind. Insbesondere können die Verbindungselemente die Handhabung und Anordnung der Nägel in der gewünschten, für die Verbindung vorgesehenen Ausrichtung vereinfachen. Gegebenenfalls kann auf zusätzliche Verbindungmittel ganz verzichtet werden. Dabei bedeutet die Ausstattung der Nägel mit den Verbindungselementen kaum einen zusätzlichen Aufwand, insbesondere wenn die Verbindungselemente bei der Herstellung der Nägel gleich an den Nagelgrundkörper angeformt werden, beispielsweise in einem Spritzgießverfahren. Ein weiterer Vorteil von an den Nägeln ausgebildeten Verbindungselementen ist, dass diese bei der Verarbeitung der Nägel gegebenenfalls mit in das jeweilige Werkstück eingetrieben werden können. Dadurch wird vermieden, dass beim Eintreiben der Nägel herabfallende Verbindungsmittel oder Reste davon ein Werkstück oder das Umfeld verschmutzen.

In einer Ausgestaltung sind die Verbindungselemente der Nägel dazu ausgebildet, benachbarte Nägel paarweise unmittelbar miteinander zu verbinden. Insbesondere kann eine formschlüssige Verbindung hergestellt werden, bei der die zusammenwirkenden Verbindungselemente von jeweils zwei benachbarten Nägeln so ineinandergreifen, dass ein für die problemlose Handhabung und Verarbeitung hinreichend stabiler Nagelstreifen entsteht. Die formschlüssige Verbindung kann durch einen Kraftschluss ergänzt werden, insbesondere durch einen klemmenden Halt eines inneren Verbindungselements innerhalb eines äußeren Verbindungselements. Auch eine Schnapp- oder Rastverbindung ist möglich. In allen Fällen können die Nagelstreifen von Hand oder maschinell bevorzugt allein aus den Nägeln zusammensetzt werden. Zusätzliche Verbindungsmittel sind dann nicht erforderlich.

In einer Ausgestaltung verjüngen sich die Verbindungselemente der Nägel in Richtung zu einer Spitze des jeweiligen Nagels hin, insbesondere so weit, dass sie an ihren der jeweiligen Spitze zugewandten Enden nicht über einen angrenzenden Querschnitt des jeweiligen Nagels überstehen. Beispielsweise können die Verbindungselemente der Nägel keilförmig sein und/oder nach vorn/außen weisende Schrägflächen aufweisen. Dadurch können die Nägel einschließlich ihrer Verbindungselemente ohne weiteres in viele Werkstoffe eingetrieben werden. Ein Abscheren, Abreißen oder Absplittern der Verbindungselemente beim Eintreiben wird vermieden.

In einer Ausgestaltung sind die Verbindungselemente der Nägel dazu ausgebildet, paarweise mit einer parallel zu den Längsachsen der Nägel ausgerichteten Bewegung zusammengesteckt oder zusammengeschoben zu werden. Dies führt zu einer Verbindung, die quer zu den Längsachsen der Nägel, insbesondere in Längsrichtung des Nagelstreifens, besonders belastbar ist. Dadurch wird vermieden, dass der Nagelstreifen beim Vorschub in einem Magazin unbeabsichtigt auseinanderfällt. Zugleich kann der jeweils vorderste Nagel des Nagelstreifens beim Eintreiben besonders einfach aus der Führung geschoben werden, indem die jeweiligen Verbindungselemente parallel zu den Längsachsen der Nägel, also in der Eintreibrichtung, wieder auseinander geschoben werden.

Erfindungsgemäß weist jeder Nagel als Verbindungselemente mindestens einen schwalbenschwanzförmigen Zapfen und eine komplementär geformte Nut auf. Jede andere Ausgestaltung einer formschlüssigen Verbindung ist denkbar. Nut und Zapfen können insbesondere parallel zu den Längsachsen des betreffenden Nagels ausgerichtet sein. Durch einfaches Zusammenschieben kann eine stabile, formschlüssige Schwalbenschwanzverbindung hergestellt werden. Der Zapfen kann im Querschnitt trapezförmig sein, aber auch davon abweichen, beispielsweise mit mehr oder weniger gekrümmten Kanten. Beispielsweise kann der Querschnitt auch halbkreis- oder rautenförmig sein. Solange die Querschnitte von Zapfen und Nut eine formschlüssige Verankerung bewirken, die im Wesentlichen nur durch eine Bewegung des Zapfens relativ zu der Nut in Längsrichtung der Nut gelöst werden kann, handelt es sich um einen schwalbenschwanzförmigen Zapfen und einer dazu komplementär geformte Nut im Sinne dieser Ausgestaltung. Die Geometrien von Zapfen und Nut können so gewählt werden, dass zugleich eine Verdrehung um eine Längsachse des Zapfens verhindert und der Nagelstreifen in einer im Wesentlichen geradlinigen Form gehalten wird. Außerdem können die Abmessungen von Zapfen und Nut so aufeinander abgestimmt werden, dass ein Kraftschluss/ein klemmender Halt entsteht, der ein unbeabsichtigtes Auseinandergleiten der Verbindung verhindert.

In einer Ausgestaltung weisen die Nägel Anschlagflächen auf, die eine zum Verbinden benachbarter Nägel auszuführende Bewegung derart begrenzen, dass die vorderen Enden der Nägel auf einer Geraden angeordnet sind. Die Anschlagflächen können insbesondere an den Verbindungselementen ausgebildet sein. Zum Beispiel kann ein Ende eines Zapfens eines Nagels mit einem Ende einer Nut eines benachbarten Nagels zusammenwirken. Die Anschlagflächen können so angeordnet sein, dass eine Bewegung eines vordersten Nagels des Nagelstreifens in Eintreibrichtung relativ zu einem benachbarten Nagel möglich ist. Durch die Anschlagflächen wird ein Zusammenfügen der Nägel zu dem Nagelstreifen in der gewünschten Streifenform vereinfacht. Zugleich wird ein Auseinandergleiten der Nägel in einer Richtung vermieden.

In einer Ausgestaltung weist die Gerade einen Winkel im Bereich von 45° bis 89° zur Längsachse der Nägel auf. Grundsätzlich kann der Winkel auch 90° betragen. In diesem Fall ergibt sich ein Nagelstreifen, dessen Längserstreckung zu den Längsachsen der Nägel rechtwinklig verläuft. Werden die Nägel jedoch in dem genannten Winkelbereich aneinandergereiht, ergibt sich bei in ein Eintreibwerkzeug eingesetztem Nagelstreifen eine besonders niedrige, d.h. werkstücknahe Position des vordersten Nagels und eine größere Flexibilität beim Ansetzen des Eintreibwerkzeugs an das Werkstück.

In einer Ausgestaltung weist der Nagelstreifen einen gesonderten Nagelstreifenverbinder auf, der sich über alle Nägel des Nagelstreifens erstreckt, und die Verbindungselemente der Nägel sind dazu ausgebildet, jeden Nagel mit dem Nagelstreifenverbinder zu verbinden. In diesem Fall stellen die Verbindungselemente der Nägel also unter Zuhilfenahme des Nagelstreifenverbinders eine mittelbare Verbindung zwischen den Nägeln her. Nach dem Einsetzen des Nagelstreifens in ein Eintreibwerkzeug kann der Nagelstreifenverbinder in bestimmten Ausgestaltungen entfernt werden. Bis zu diesem Zeitpunkt stellt er eine einfache und sichere Handhabbarkeit des Nagelstreifens sicher.

In einer Ausgestaltung weist der Nagelstreifenverbinder einen Griffabschnitt auf, an dem der Nagelstreifenverbinder aus dem Nagelstreifen herausgezogen werden kann. Diese Möglichkeit besteht insbesondere, nachdem der Nagelstreifen in ein Magazin eines Eintreibwerkzeugs eingesetzt wurde. Der Griffabschnitt steht dann aus dem Magazin hervor und die Nägel sind derart in dem Magazin gehalten, dass sie beim Herausziehen des Nagelstreifenverbinders in der gewünschten Anordnung, allerdings ohne Verbindung zueinander, in dem Magazin verbleiben.

In einer Ausgestaltung ist der Nagelstreifenverbinder ein Papier-, Papp-, Textil- oder Kunststoffstreifen, ein Faden oder ein Draht. Die Verbindungselemente der Nägel können dazu ausgebildet sein, klemmend, schnappend und/oder rastend an dem Streifen, Faden oder Draht befestigt zu werden. Dadurch gelingt das Zusammensetzen der Nägel zu dem Nagelstreifen besonders einfach. Die Verbindung mittels der Verbindungselemente der Nägel kann die einzige Befestigung des Nagelstreifenverbinders an den Nägeln sein. Ebenfalls möglich ist eine zusätzliche Fixierung des Nagelstreifenverbinders an einem Nagel oder an mehreren Nägeln, insbesondere mit einem Klebstoff oder einem Klebestreifen.

In einer Ausgestaltung weist jeder Nagel als Verbindungselement eine Durchgangsöffnung auf, die auf den Nagelstreifenverbinder auffädelbar ist. Die Durchgangsöffnung kann zum Beispiel ein Schlitz sein, in den ein streifenförmiger Nagelstreifenverbinder eingefädelt wird. Es können auch eine kreisförmige Durchgangsöffnung oder mehrere, insbesondere zwei, kreisförmige Durchgangsöffnungen mit jeweils einem Faden oder Draht kombiniert werden.

In einer Ausgestaltung weist jeder Nagel als Verbindungselemente mehrere Aussparungen auf und der Nagelstreifenverbinder mehrere Arme, die mit den Aussparungen zusammenwirken. Auf diese Weise können die Nägel besonders einfach und exakt in der vorgesehenen Anordnung an dem Nagelstreifenverbinder befestigt werden. Die Verbindung zwischen dem Nagelstreifenverbinder und den Nägeln kann insbesondere eine Schnapp- und/oder Rastverbindung sein, so dass sich ein klemmender und/oder formschlüssiger Halt ergibt. Die Arme können insbesondere jeweils eine Rastnase aufweisen, die in eine der Aussparungen einrastet. Die Arme können in die Aussparungen eingreifen. Bevorzugt sind jeweils zwei der Arme einander gegenüberliegend angeordnet und fixieren einen zwischen den Armen befindlichen Nagel, der zwei korrespondierend angeordnete Aussparungen aufweist.

In einer Ausgestaltung sind die Verbindungselemente der Nägel bügel- oder clipförmig. Dadurch wird eine einfache und sichere Befestigung an dem Nagelstreifenverbinder vereinfacht.

In einer Ausgestaltung weisen die Nägel jeweils einen Grundkörper mit einer Aufnahme für den RFID-Transponder auf und die Verbindungselemente der Nägel sind an dem Grundkörper ausgebildet. Insbesondere können der Grundkörper und die Verbindungselemente der Nägel einteilig, zum Beispiel aus Kunststoff in einem Spritzgießverfahren, gefertigt sein. Dies ist besonders einfach. Zur Fertigstellung der Nagelstreifen müssen nur noch die RFID-Transponder in die Aufnahmen eingesetzt und gegebenenfalls darin fixiert und anschließend die Nägel mit funktionsfähigen RFID-Transpondern selektiert und mit Hilfe ihrer Verbindungselemente mittelbar oder unmittelbar zu dem Nagelstreifen verbunden werden.

In einer Ausgestaltung weisen die RFID-Transponder einen wiederbeschreibbaren Speicher auf. In diesem Fall können vor oder nach dem Eintreiben der Nägel in ein Werkstück gezielt Daten gespeichert werden, beispielsweise Nutzungsdaten einer mit dem Nagel gekennzeichneten Palette.

Die oben genannte Aufgabe wird ebenfalls gelöst durch das Verfahren mit den Merkmalen des Anspruchs 15. Das Verfahren dient zur Herstellung eines Nagelstreifens nach einem der Ansprüche 1 bis 14, der zur Verarbeitung mit einem Eintreibwerkzeug bestimmt ist, und umfasst die folgenden Schritte:
- Bereitstellen einer Vielzahl von Nägeln, die jeweils mit einem RFID-Transponder versehen sind,
- Prüfen der mit den RFID-Transpondern versehenen Nägel auf die Funktionsfähigkeit der RFID-Transponder hin,
- Auswählen derjenigen Nägel, die einen funktionsfähigen RFID-Transponder aufweisen, und
- Verbinden der ausgewählten Nägel miteinander zu dem Nagelstreifen mit Verbindungsmitteln.

Zu den Merkmalen und Vorteilen des Verfahrens wird auf die vorstehenden Erläuterungen des Nagelstreifens verwiesen. Diese gelten entsprechend. Das Verfahren kann insbesondere zur Herstellung eines Nagelstreifens mit den Merkmalen eines der Ansprüche 1 bis 16 eingesetzt und entsprechend ausgestaltet werden. Insbesondere können die Nägel jeweils mindestens ein Verbindungselement aufweisen. Die Verbindung zu dem Nagelstreifen kann mit Hilfe der Verbindungselemente mittelbar oder unmittelbar erfolgen, wie zu den Nagelstreifen im Einzelnen erläutert. Dem Bereitstellen der Nägel kann ein Verfahrensschritt vorausgehen, in dem die Nägel bzw. Nagelgrundkörper hergestellt und mit jeweils einem RFID-Transponder versehen werden.

Nachfolgend wird die Erfindung anhand von Figuren näher erläutert. Es zeigen:
- Fig. 1: einen Nagelstreifen in einer Ansicht von der Seite;
- Fig. 2: einen Nagel des Nagelstreifens aus Fig. 1 bei geschlossener und bei geöffneter Anordnung von Vorder- und Hinterteil in einer perspektivischen Ansicht;
- Fig. 3: die Anordnung aus Fig. 2 in einer perspektivischen Ansicht aus einem anderen Blickwinkel;
- Fig. 4: einen Nagel des Nagelstreifens aus Fig. 1 in fünf Ansichten aus unterschiedlichen Blickrichtungen und in einem Längsschnitt;
- Fig. 5: ein Hinterteil eines Grundkörpers eines Nagels aus Fig. 4 in fünf Ansichten aus unterschiedlichen Blickrichtungen;
- Fig. 6: zwei miteinander verbundene Nägel des Nagelstreifens aus Fig. 1 in einer Ansicht von der Seite und in einem Querschnitt;
- Fig. 7: einen Nagel eines anderen Nagelstreifens in fünf Ansichten aus unterschiedlichen Blickrichtungen und in einem Längsschnitt;
- Fig. 8: den Nagel aus Fig. 7 in fünf Ansichten aus unterschiedlichen Blickrichtungen bei geöffneter Anordnung von Vorder- und Hinterteil;
- Fig. 9: einen weiteren Nagelstreifen in einer Ansicht von der Seite;
- Fig. 10 den: Nagelstreifen aus Fig. 9 in einer Ansicht von vorn;
- Fig. 11: einen Nagel des Nagelstreifens aus Fig. 9 bei geschlossener und bei geöffneter Anordnung von Vorder- und Hinterteil in einer perspektivischen Ansicht;
- Fig. 12: einen weiteren Nagelstreifen in einer Ansicht von der Seite;
- Fig. 13: den Nagelstreifen aus Fig. 12 in einer Ansicht von vorn;
- Fig. 14: einen Nagel des Nagelstreifens aus Fig. 12 bei geschlossener und bei geöffneter Anordnung von Vorder- und Hinterteil in einer perspektivischen Ansicht;
- Fig. 15: einen weiteren Nagelstreifen in einer Ansicht von der Seite;
- Fig. 16: den Nagelstreifen aus Fig. 15 in einer Ansicht von vorn;
- Fig. 17: einen Nagel des Nagelstreifens aus Fig. 15 bei geschlossener und bei geöffneter Anordnung von Vorder- und Hinterteil in einer perspektivischen Ansicht,
- Fig. 18: einen weiteren Nagelstreifen in drei unterschiedlichen Ansichten und einer Querschnittsdarstellung,
- Fig. 19: einen Nagel des Nagelstreifens aus Fig. 18 in vier unterschiedlichen Ansichten und einer Querschnittsdarstellung,
- Fig. 20: den Nagelstreifenverbinder des Nagelstreifens aus Fig. 18 in drei unterschiedlichen Ansichten.

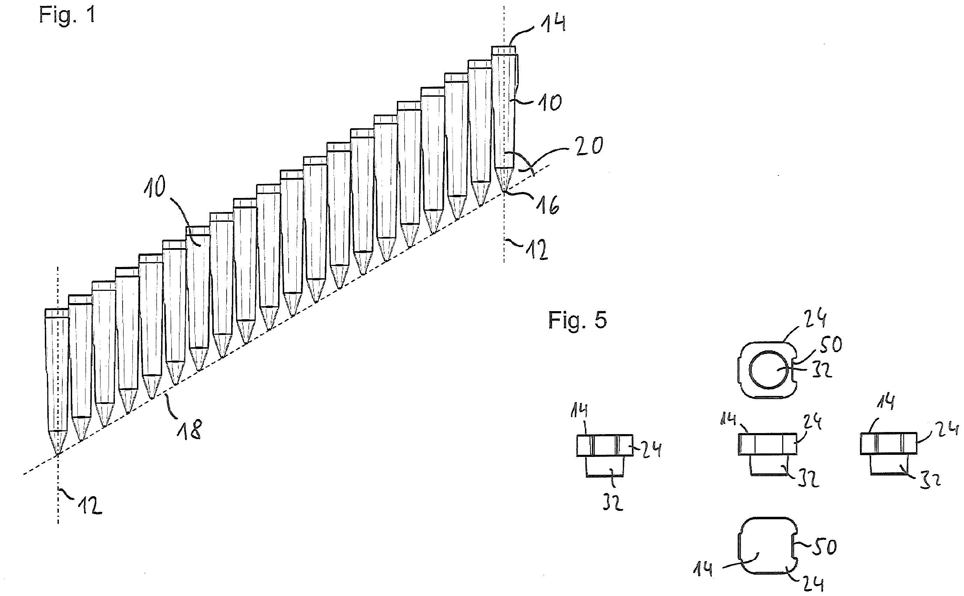

Der Nagelstreifen aus Fig. 1 umfasst zwanzig miteinander verbundene Nägel 10. Jeder Nagel 10 weist eine Längsachse 12, ein hinteres Ende, an dem eine Eintreibfläche 14 ausgebildet ist, und ein vorderes Ende auf, an dem eine Nagelspitze 16 ausgebildet ist. Die Nagelspitzen 16 der miteinander verbundenen Nägel 10 liegen auf einer Geraden 18, die in einem Winkel 20 von etwa 60° zu den Längsachsen 12 der Nägel 10 angeordnet ist.

Bei der Verarbeitung des Nagelstreifens in einem Eintreibwerkzeug wird der in der Fig. 1 ganz links befindliche Nagel 10 zuerst eingetrieben und dazu in Richtung seiner Längsachse 12 nach unten aus dem Formschluss herausgeschoben, d.h. in Richtung zu seiner Nagelspitze 16 hin bewegt und von dem benachbarten Nagel 10 getrennt.

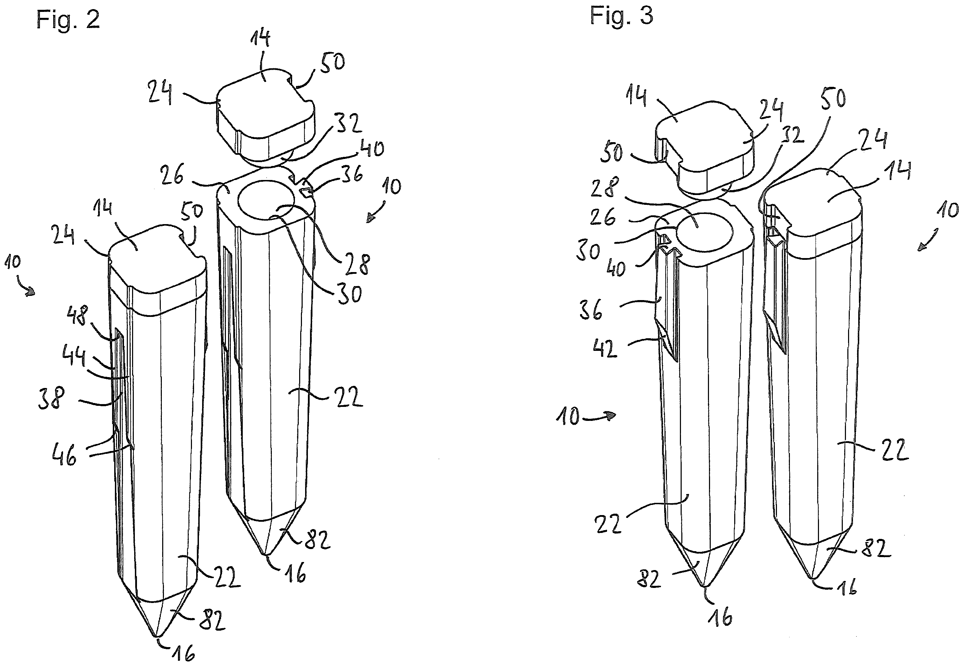

Fig. 2 zeigt Einzelheiten der einzelnen Nägel 10 des Nagelstreifens aus Fig. 1 deutlicher. Man erkennt, dass der Nagel 10 einen Grundkörper mit einem Vorderteil 22 und einem Hinterteil 24 aufweist. Die Nagelspitze 16 ist am vorderen Ende des Vorderteils 22, die Eintreibfläche 14 am hinteren Ende des Hinterteils 24 ausgebildet. Vorderteil 22 und Hinterteil 24 weisen mit Ausnahme des Bereichs nahe der Nagelspitze 16 im Wesentlichen den gleichen Querschnitt auf. Dieser ist quadratisch mit stark abgerundeten Ecken.

An einer Teilungsfläche 26, von der in der Fig. 2 nur ein quer zur nicht dargestellten Längsachse 12 ausgerichteter, ebener Abschnitt sichtbar ist, grenzen Vorderteil 22 und Hinterteil 24 aneinander an und sind miteinander verbunden. Der Querschnitt des Vorderteils 22 verjüngt sich mit zunehmendem Abstand von der Teilungsfläche 26 ganz leicht bis zu einem konischen bzw. kegelförmigen Abschnitt 82 nahe der Nagelspitze 16.

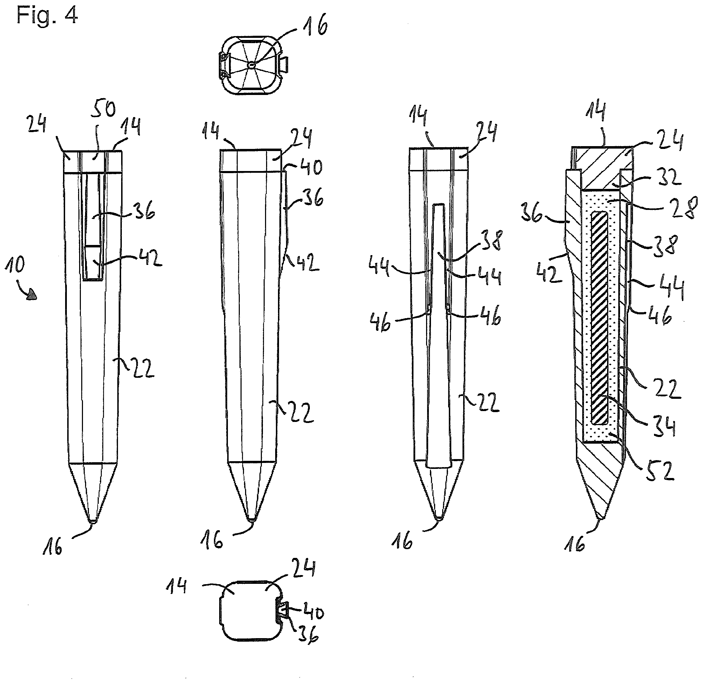

Ein kreiszylindrischer Aufnahmraum 28 befindet sich im Inneren des Grundkörpers. In der Fig. 2 sieht man eine kreisrunde Öffnung 30 im Vorderteil 22, die zu dem Aufnahmeraum 28 führt. Am Hinterteil 24 ist ein kreisscheibenförmiger Vorsprung 32 ausgebildet, der wie ein Stopfen in die Öffnung 30 eingesetzt wird. Bei der geschlossenen, in der Fig. 2 links gezeigten Anordnung ist der Aufnahmeraum 28 vollständig von dem Vorderteil 22 und dem Hinterteil 24 umschlossen. Innerhalb des Aufnahmeraums 28 ist ein RFID-Transponder 34 angeordnet, der nur schematisch in der Fig. 4 dargestellt ist.

Um benachbarte Nägel 10 miteinander zu verbinden, weist jeder Nagel zwei Verbindungselemente auf, nämlich an einer nach hinten (betrachtet in Richtung des Vorschubs des Nagelstreifens in einem Eintreibwerkzeug) weisenden Seite einen schwalbenschwanzförmigen Zapfen 36 und an der gegenüberliegenden, nach vorn weisenden Seite eine dazu komplementär geformte Nut 38. Zapfen 36 und Nut 38 verlaufen annähernd parallel zur Längsachse 12 und sind an das Vorderteil 22 des Grundkörpers angeformt, beispielsweise bei der Herstellung des Vorderteils 22 in einem Spritzgießverfahren.

Wie am besten in Fig. 3 erkennbar, erstreckt sich der Zapfen 36 vom hinteren Ende des Vorderteils/von der Teilungsfläche 26 an, wo er eine Anschlagfläche 40 aufweist, über etwa ein Drittel der Länge des Vorderteils 22. Zu seinem vorderen, zur Nagelspitze 16 weisenden Ende hin verjüngt sich der Zapfen 36, denn seine Höhe nimmt entlang einer Schrägfläche 42 bis auf null ab. Das der Nagelspitze 16 zugewandte Ende des Zapfens 36 steht somit nicht über den angrenzenden Querschnitt des Vorderteils 22 über.

Die besser in Fig. 2 erkennbare Nut 38 beginnt etwas unterhalb der Teilungsfläche 26, in einem Abstand vom hinteren Ende des Vorderteils 22, und erstreckt sich von dort zur Nagelspitze 16 hin ebenfalls über etwa ein Drittel der Länge des Vorderteils 22. Die Höhen der beiden die Nut 38 seitlich begrenzenden Stege 44 nehmen am vorderen Ende der Nut 38 ebenfalls bis auf null ab, und auch dort sind Schrägflächen 46 ausgebildet.

Das hintere Ende der Nut 38 bildet eine Anschlagfläche 48, die mit der am Zapfen 36 ausgebildeten Anschlagfläche 40 zusammenwirkt und beim Einschieben des Zapfens 36 in die Nut 38 die Bewegung stoppt, wenn die in Fig. 1 gezeigte Anordnung erreicht ist. Dabei sind Zapfen 36 und Nut 38 so aufeinander abgestimmt, dass sich zusätzlich zu dem Formschluss ein klemmender Halt ergibt, der eine problemlose Handhabung des Nagelstreifens ermöglicht.

Um das Einschieben des Zapfens 36 in die Nut 38 bei geschlossenem Grundkörper zu ermöglichen, weist das Hinterteil 24, das im Übrigen die Form einer kleinen Kappe aufweist, an der zu dem Zapfen 36 hin orientierten Seite eine Aussparung 50 auf, über deren Boden der Zapfen 36 seitlich übersteht.

Figur 4 zeigt einen Nagel 10 des Nagelstreifens aus Fig. 1 ganz oben in einer Ansicht auf die Nagelspitze 16, ganz unten in einer Ansicht auf die Eintreibfläche 14, ganz links in einer Ansicht auf die hintere Seite mit dem Zapfen 36, rechts davon in einer seitlichen Ansicht, nochmals rechts davon in einer Ansicht auf die vordere Seite mit der Nut 38. Ganz rechts ist ein Längsschnitt dargestellt.

In der Schnittebene sind sowohl der Zapfen 36 als auch die Nut 38 gut zu erkennen, ebenso der Vorsprung 32 an dem Hinterteil 24 und der Aufnahmeraum 28 mit dem darin angeordneten RFID-Transponder 34, der von einem pulverförmigen Füllmaterial 52 umgeben ist. In dem Längsschnitt ist außerdem gut zu erkennen, dass das Hinterteil 24 einen die Eintreibfläche 14 bildenden, scheibenförmigen Abschnitt aufweist, der sich mit einer Materialstärke von mindestens 2 mm über den gesamten Querschnitt des Hinterteils 24 erstreckt. Die bereits im Zusammenhang mit den Figuren 1 bis 3 erläuterten Elemente sind mit den bereits dort eingeführten Bezugszeichen versehen. Hierzu wird auf die vorstehenden Erläuterungen verwiesen.

In der Fig. 5 ist das Hinterteil 24 eines Grundkörpers allein dargestellt, ebenfalls in fünf Ansichten, deren Anordnung derjenigen aus Fig. 4 entspricht. Man erkennt, dass der Vorsprung 32 für einen festen Sitz in der Öffnung 30 leicht konisch geformt ist.

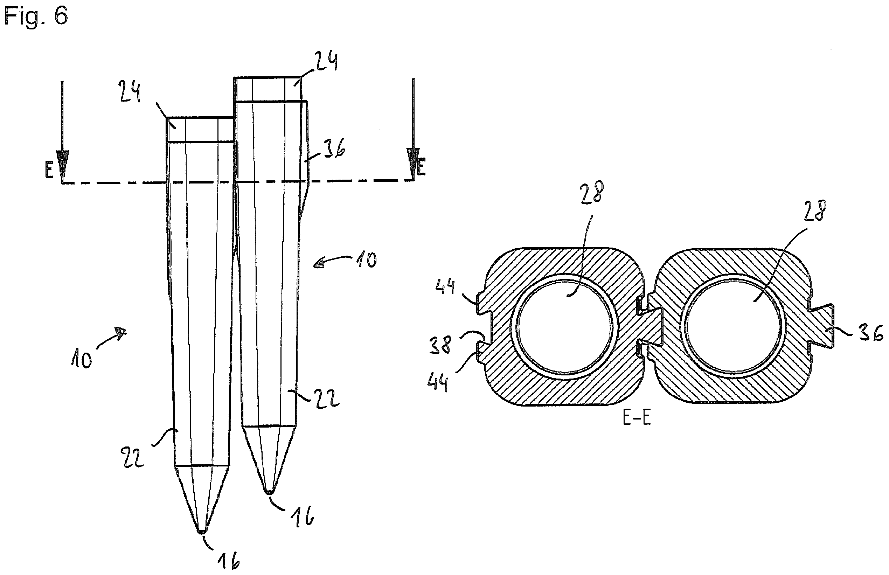

Figur 6 verdeutlicht in der Ansicht links die Lage der mit E-E bezeichneten Schnittebene. Der Schnitt ist im rechten Teil der Figur dargestellt. In der Ansicht ist die in Richtung der nicht dargestellten Längsachsen 12 versetzte Anordnung der beiden benachbarten Nägel 10, die sich aus dem erläuterten Zusammenwirken der Anschlagflächen 40, 48 ergibt, gut erkennbar. In der Schnittdarstellung wird die formschlüssige Verbindung zwischen dem im Querschnitt trapezförmigen Zapfen 36 und der Nut 38 deutlich. Man erkennt auch, dass diese Verbindung keine Verdrehung um eine Drehachse zulässt, die parallel zur den Längsachsen 12 ausgerichtet ist. Sie fixiert darum die Anordnung der Nägel 10 in Form des geraden Nagelstreifens.

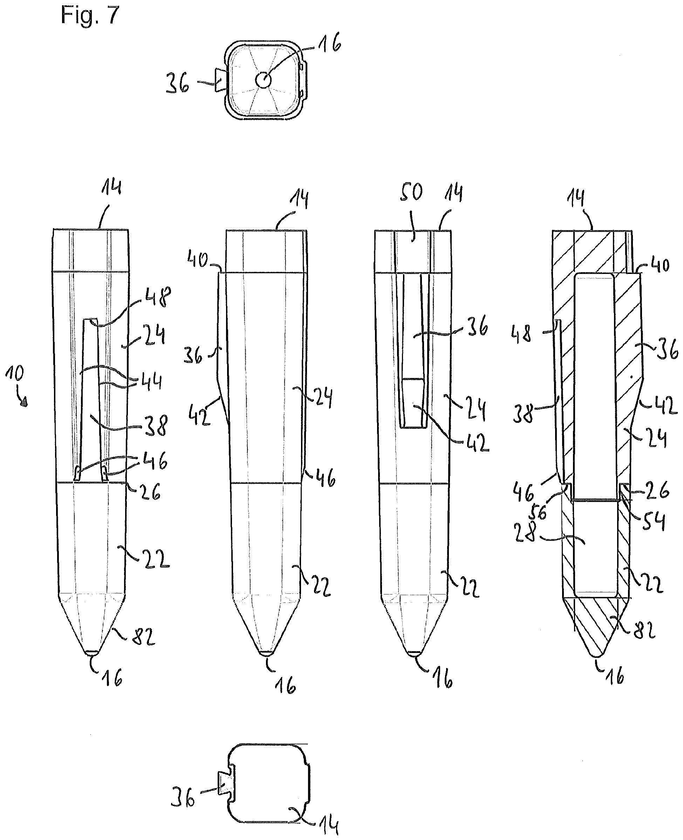

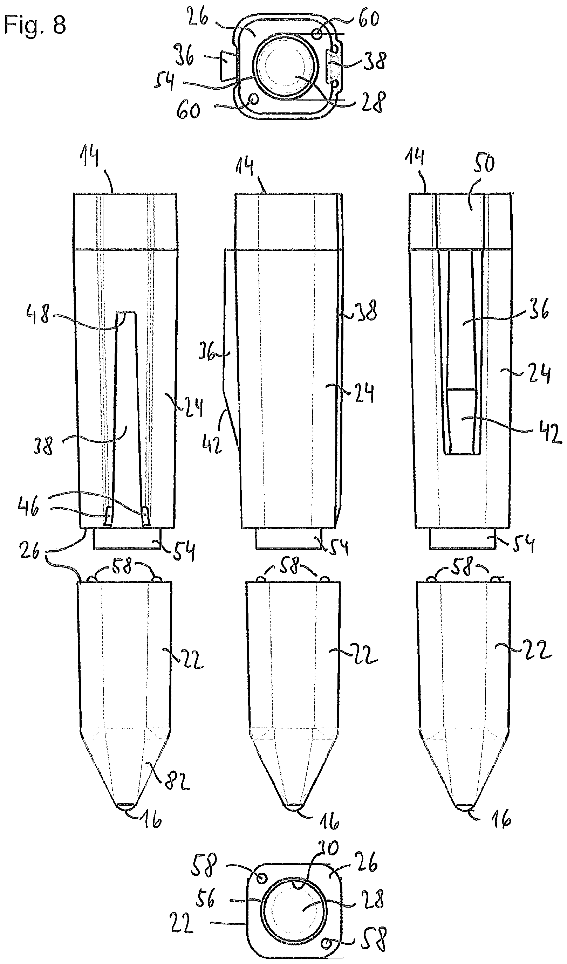

Die Figuren 7 und 8 zeigen einen anderen Nagel 10, der eine Verbindung zu einem Nagelstreifen ähnlich demjenigen aus Fig. 1 erlaubt. Die sechs von der Fig. 7 umfassten Ansichten entsprechen bis auf ihre relative Anordnung den zur Fig. 4 erläuterten. Die fünf von Fig. 8 umfassten Ansichten entsprechen den Ansichten aus Fig. 7, wobei Vorderteil 22 und Hinterteil 24 in einem Abstand voneinander gezeichnet sind und die kleinen, ganz oben und unten dargestellten Ansichten jetzt nicht den gesamten Nagel 10, sondern nur das Hinterteil 24 (oben) bzw. nur das Vorderteil 22 (unten) zeigen. Der wesentliche Unterschied des Nagels 10 der Figuren 7 und 8 von demjenigen aus den Figuren 1 bis 6 besteht in der abweichenden Zweiteilung des Grundkörpers in Vorderteil 22 und Hinterteil 24, bei der die Teilungsfläche 26 weiter vom angeordnet ist, so dass sich das Vorderteil 22 nunmehr über etwa ein Drittel der Gesamtlänge des Nagels 10 und das Hinterteil 24 über etwa zwei Drittel davon erstreckt. Die Anordnung der Verbindungselemente Zapfen 36 und Nut 38 ist bezogen auf den gesamten Nagel 10 nahezu unverändert, sie sind jetzt jedoch am Hinterteil 24 ausgebildet. Statt des Vorsprungs 32 am Hinterteil 24 weist dieses nun einen umlaufenden Kragen 54 auf, der in die jetzt eine Stufe 56 aufweisende Öffnung 30 des Vorderteils 22 eingepasst ist.

Eine weitere Besonderheit besteht in einer zwischen Vorderteil 22 und Hinterteil 24 wirkenden Verdrehsicherung, die zwei kleine Vorsprünge 58 am Vorderteil 22 und zwei korrespondierende Aussparungen 60 am Hinterteil 24 aufweist. Die übrigen Elemente sind weitgehend unverändert und mit den gleichen Bezugszeichen versehen wie in den Figuren 1 bis 6. Die vorstehenden Erläuterungen dazu gelten entsprechend.

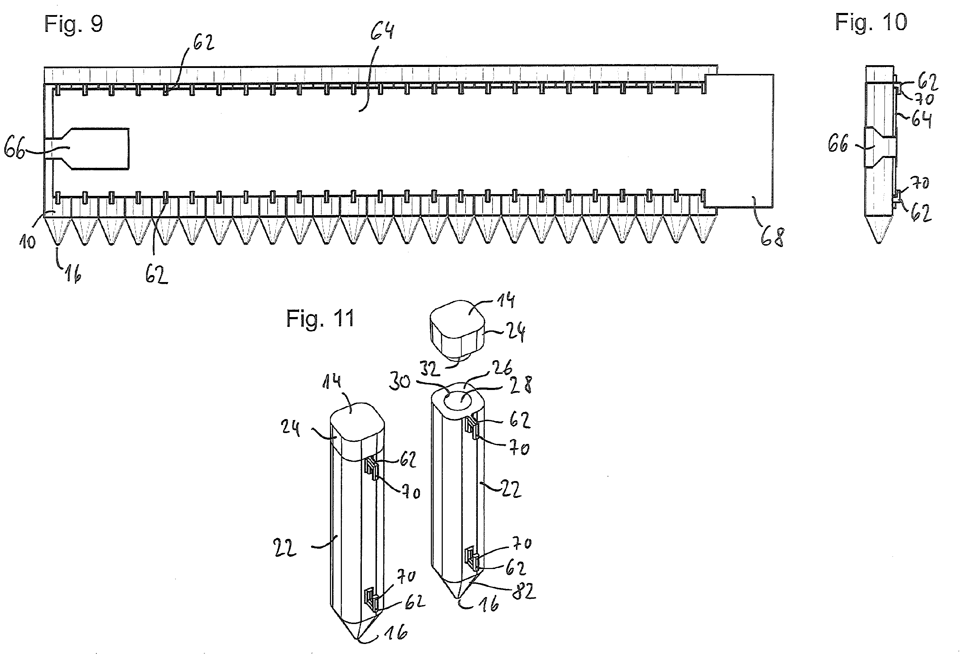

Das in den Figuren 9 bis 11 dargestellte Beispiel betrifft einen Nagelstreifen, bei dem an den einzelnen Nägeln 10 ausgebildete Verbindungselemente die Nägel mittelbar mithilfe eines von den Nägeln 10 verschiedenen Verbindungsmittels zu dem Nagelstreifen verbinden. Die Verbindungselemente der Nägel sind kleine, einander paarweise gegenüberliegende Haken 62. Als weiteres Verbindungsmittel dient ein über die gesamte Länge des Nagelstreifens erstreckter, fester Papierstreifen 64, der an seinem vorderen Ende mit einem Klebestreifen 66 an einem vordersten Nagel 10 befestigt und an seinem hinteren Ende mit einem Griffabschnitt 68 versehen ist. Die Breite des Papierstreifens 64 ist so bemessen, dass der Papierstreifen 64 den zwischen zwei Haken 62 eines Nagels vorhandenen Freiraum im Wesentlichen ausfüllt. Zwei einander zugewandte Nasen 70 der Haken 62 hintergreifen den Papierstreifen 64 und fixieren so den Nagel an dem Papierstreifen 64. Am seinem hinteren Ende weist der Papierstreifen 64 eine Verbreiterung auf, die ein Verrutschen des hintersten Nagels 10 nach hinten verhindert und zugleich den Griffabschnitt 68 bildet.

Der Nagelstreifen kann in der in den Figuren 9 und 10 gezeigten Anordnung in ein Eintreibwerkzeug eingesetzt werden. Die Nägel können dann durch das Eintreibwerkzeug, insbesondere durch ein Magazin davon, in der aneinandergereihten Anordnung gehalten werden, so dass der Papierstreifen 64 durch Ziehen an dem Griffabschnitt 68 entfernt werden kann. Dass die Haken 62 beim Eintreiben der Nägel in ein Werkstück möglicherweise abbrechen, stellt in vielen Fällen kein Problem dar, weil die Stabilität und Integrität der Nägel 10 dadurch nicht beeinträchtigt wird.

Figur 11 lässt weitere Einzelheiten der Nägel 10 erkennen, insbesondere, dass diese wiederum aus einem Vorderteil 22 und einem Hinterteil 24 zusammengefügt sind. Zur Geometrie dieser Teile gelten die Erläuterungen zu den Figuren 1 bis 6 entsprechend, sofern sich diese nicht auf die dort anders ausgeführten Verbindungselemente beziehen.

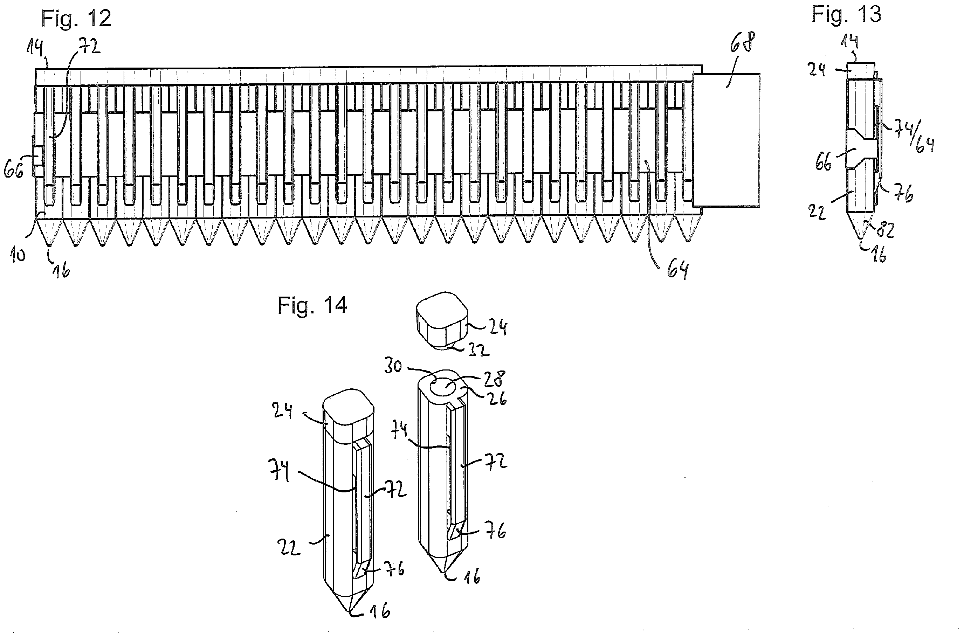

Das in den Figuren 12 bis 14 dargestellte Beispiel betrifft einen Nagelstreifen, der ähnlich wie derjenige aus den Figuren 9 bis 11 einen Papierstreifen 64 als weiteres Verbindungsmittel aufweist. Statt der beiden Haken 62 weisen die Nägel 10 jedoch einen bügelförmigen Steg 72 auf, der eine Durchgangsöffnung 74 bildet, durch die der Papierstreifen 64 hindurchgeführt ist. Die Nägel 10 können auf den Papierstreifen 64 aufgefädelt werden. Am vorderen Ende des Stegs 72 ist eine Schrägfläche 76 ausgebildet.

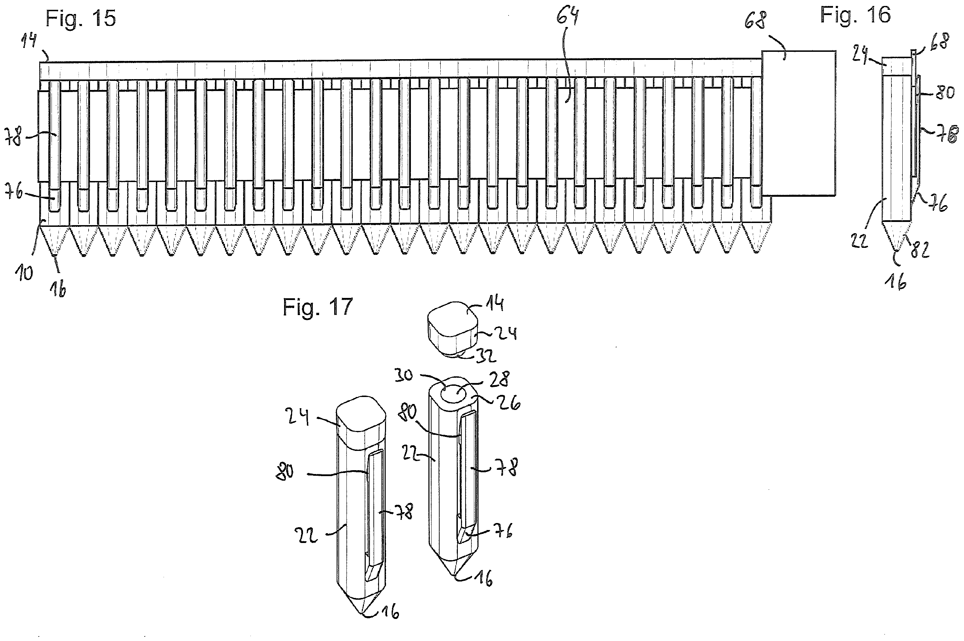

Das in den Figuren 15 bis 17 dargestellte Beispiel zeigt einen Nagelstreifen, der ebenfalls einen Papierstreifen 64 als weiteres Verbindungsmittel aufweist. Im Unterschied zu den Figuren 12 bis 14 sind als Verbindungselemente der Nägel 10 clipförmige Stege 78 vorgesehen. Das hintere Ende eines Stegs 78 ist mit dem Vorderteil 22 des zugehörigen Grundkörpers verbunden. Es weist außerdem eine Schrägfläche 76 auf. Das hintere Ende des Stegs 78 ist frei; es weist eine Rastnase 80 auf. Dadurch können die Nägel 10 auf den Papierstreifen 64 aufgeschoben werden, ähnlich wie ein Kugelschreiber mit einem Halteclip. Beim Eintreiben eines Nagels 10 kann dieser gegebenenfalls ohne Zerstörung des Papierstreifens 64 nach unten von dem Papierstreifen 64 heruntergeschoben werden, sofern der Papierstreifen 64 nicht schon zuvor entfernt wurde, insbesondere nach dem Einsetzen des Nagelstreifens in ein Magazin, sodass sich danach nur noch einzelne Nägel im Magazin befinden.

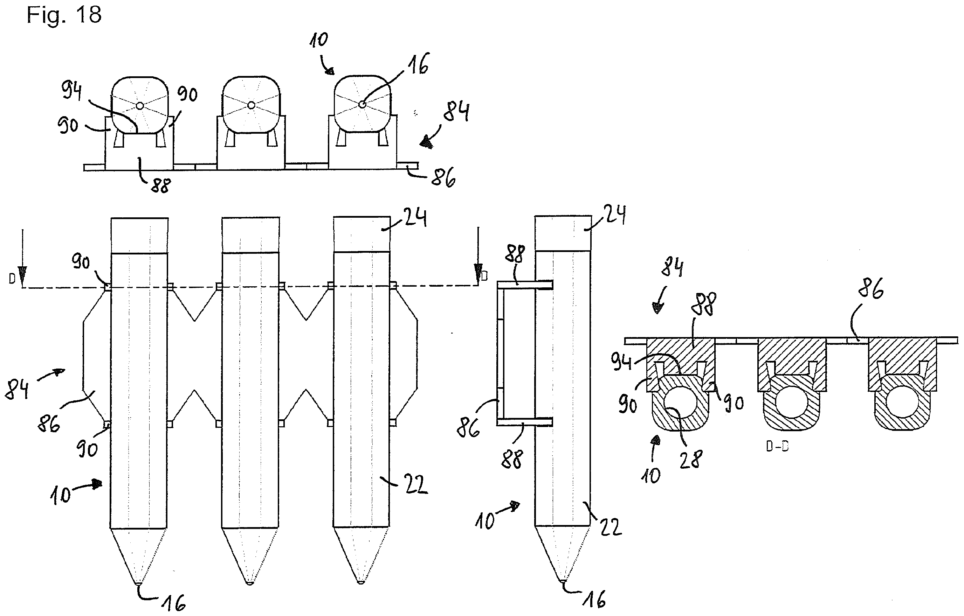

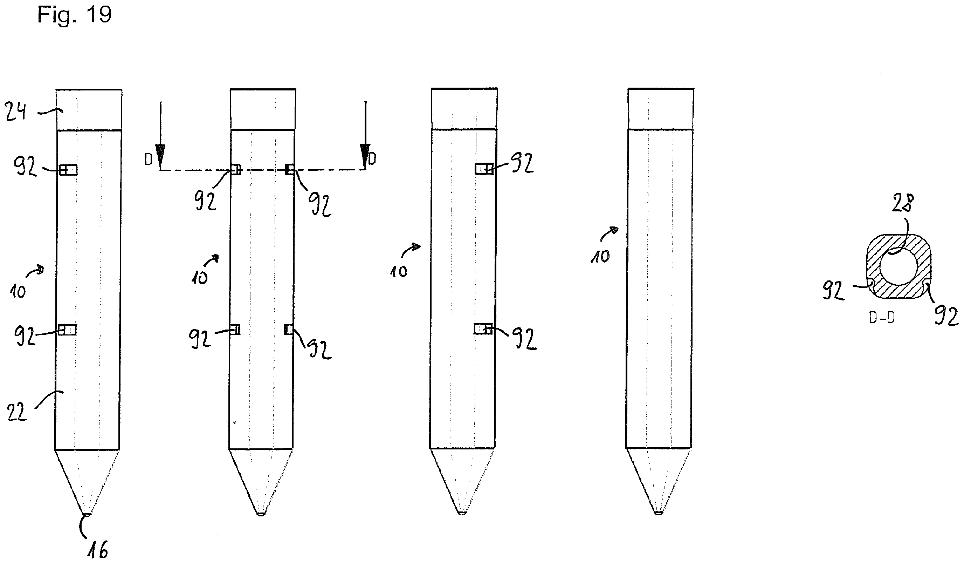

Fig. 18 zeigt einen Nagelstreifen, bei dem als Nagelstreifenverbinder ein Kunststoffstreifen 84 zum Einsatz kommt. In der Ansicht oben ist der Blick auf die Nagelspitzen 16 gerichtet, darunter fällt er von der Seite auf den Nagelstreifen. Rechts davon befindet sich eine Ansicht auf den Nagelstreifen von vorn, ganz rechts eine Querschnittsdarstellung entlang der mit D-D bezeichnete Ebene. Der Kunststoffstreifen 84 weist ein Kunststoffband 86 auf, das an einer Seite des Nagelstreifens in gleichmäßigem Abstand von den Nägeln 10 angeordnet ist. Ausgehend von den Längskanten des Kunststoffbands 86 erstrecken sich in regelmäßigen Abständen paarweise einander gegenüberliegende Halteelemente 88, die etwa rechtwinklig zur Ebene des Kunststoffbands 86 ausgerichtet sind. Jedes Halteelement 88 hat zwei einander gegenüberliegend angeordnete Arme 90, die jeweils in eine Aussparung 92 (siehe Fig. 19) eines Nagels 10 eingreifen. Zwischen jeweils zwei gegenüberliegend angeordneten Armen 90 haben die Halteelemente 88 jeweils eine Stirnkante 94, an der der von den Armen 90 gehaltene Nagel 10 anliegt.

Die Nägel 10 weisen ähnlich wie in den übrigen Beispielen jeweils ein Vorderteil 22 und ein Hinterteil 24 auf, die miteinander verbunden sind, sowie einen Aufnahmeraum 28.

Einzelheiten der Nägel 10 sind besser in Fig. 19 erkennbar, die einen der Nägel 10 in vier unterschiedlichen Ansichten und ganz rechts in einem Querschnitt zeigt. Die Nägel 10 weisen eine zylindrische Grundform mit abgerundet-quadratischem Querschnitt auf. Jeder Nagel 10 hat vier Aussparungen 92, die an zwei dem Nagelstreifenverbinder zugewandten Längskanten des Nagels 10 ausgebildet sind. Wie in der Querschnittsdarstellung erkennbar, weisen die Aussparungen 92 jeweils einen Hinterschnitt auf, so dass die Arme 90 in die Aussparungen 92 einrasten oder einschnappen können.

Zwei einander gegenüberliegende Aussparungen 92 sind in der gekennzeichneten Querschnittsebene D-D angeordnet, die sich im hinteren Drittel des Nagels 10 befindet. Zwei weitere, einander gegenüberliegende Aussparungen 92 befinden sich weiter vorn, in der vorderen Hälfte des Nagels 10. Der Abstand zwischen den beiden Paaren von Aussparungen 92 entspricht etwa der Breite des Kunststoffbands 86. Sämtliche Aussparungen 92 sind im Vorderteil 22 des Nagels ausgebildet.

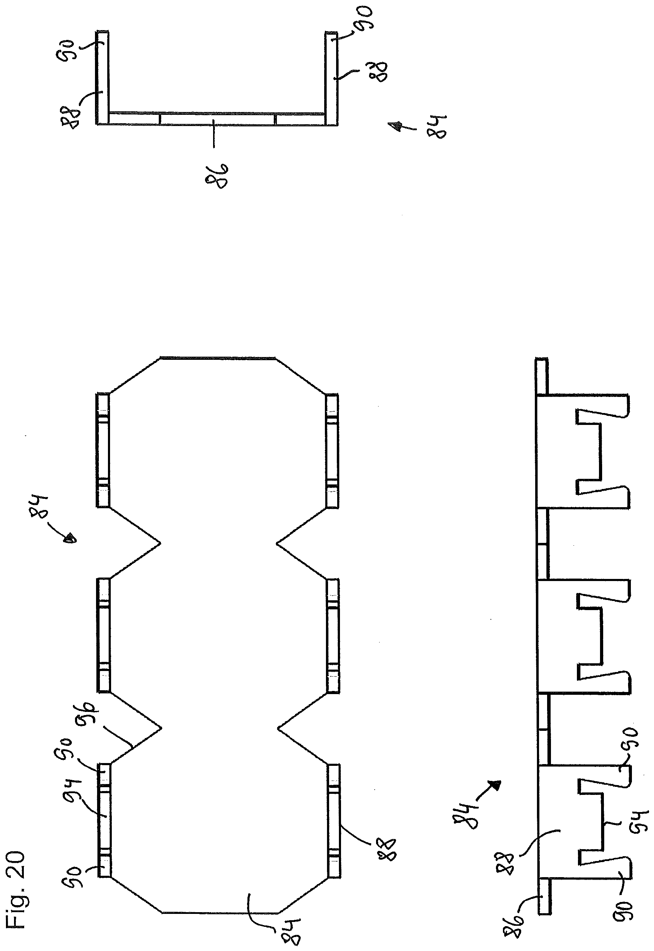

Fig. 20 zeigt besonders deutlich die bereits erläuterte Form des Kunststoffstreifens 84, der in Alleinstellung in drei Ansichten gezeigt ist, nämlich oben von der den Nägeln 10 zugewandten Seite aus betrachtet, unten von der Oberseite des Nagelstreifens, an der sich die Hinterteile 24 befinden, aus betrachtet, rechts in einer Ansicht von vorn. Gut erkennbar sind die mit Rastnasen versehenen bzw. Rastnasen bildenden Arme 90 und die jeweils dazwischen angeordneten Stirnkanten 94 der Halteelemente 88.

Das Kunststoffband 86 weist jeweils zwischen zwei Halteelementen 88 einen V-förmigen Einschnitt 96 auf, und zwar auf beiden Seiten. Dadurch kann ein Abschnitt des Kunststoffstreifens 84, der sich bei der Verarbeitung des Nagelstreifens nach und nach aus einem Magazin eines Eintreibgeräts herausschiebt, einfach abgetrennt werden.

### Liste der Bezugszeichen

- 10: Nagel
- 12: Längsachse
- 14: Eintreibfläche
- 16: Nagelspitze
- 18: Gerade
- 20: Winkel
- 22: Vorderteil
- 24: Hinterteil
- 26: Teilungsfläche
- 28: Aufnahmeraum
- 30: Öffnung
- 32: Vorsprung
- 34: RFID-Transponder
- 36: Zapfen
- 38: Nut
- 40: Anschlagfläche
- 42: Schrägfläche
- 44: Steg
- 46: Schrägfläche
- 48: Anschlagfläche
- 50: Aussparung
- 52: Füllmaterial
- 54: Kragen
- 56: Stufe
- 58: Vorsprung
- 60: Aussparung
- 62: Haken
- 64: Papierstreifen
- 66: Klebstoff
- 68: Griffabschnitt
- 70: Nase
- 72: bügelförmiger Steg
- 74: Durchgangsöffnung
- 76: Schrägfläche
- 78: clipförmiger Steg
- 80: Rastnase
- 82: konischer/kegelförmiger Abschnitt
- 84: Kunststoffstreifen
- 86: Kunststoffband
- 88: Halteelement
- 90: Arm
- 92: Aussparung
- 94: Stirnkante
- 96: Einschnitt

## Patentansprüche

1. Nagelstreifen, der zur Verarbeitung mit einem Eintreibwerkzeug bestimmt ist und folgendes umfasst:
• eine Vielzahl von Nägeln (10), die jeweils mit einem RFID-Transponder (34) versehen sind, und
• Verbindungsmittel zur Verbindung der Nägel (10) zu dem Nagelstreifen, wobei
• die Verbindungsmittel dazu ausgebildet sind, die Verbindung der Nägel (10) zu dem Nagelstreifen herzustellen, nachdem die mit den RFID-Transpondern (34) versehenen Nägel (10) auf die Funktionsfähigkeit der RFID-Transponder (34) hin geprüft und diejenigen Nägel (10) ausgewählt worden sind, die einen funktionsfähigen RFID-Transponder (34) aufweisen, und wobei
• die Verbindungsmittel eine Vielzahl von Verbindungselementen umfassen, von denen jeder Nagel (10) mindestens eines aufweist,
**dadurch gekennzeichnet, dass**
• jeder Nagel (10) als Verbindungselemente einen schwalbenschwanzförmigen Zapfen (36) und eine komplementär geformte Nut (38) aufweist.

2. Nagelstreifen nach Anspruch 1, **dadurch gekennzeichnet, dass** die Verbindungselemente der Nägel (10) dazu ausgebildet sind, benachbarte Nägel (10) paarweise unmittelbar miteinander zu verbinden.

3. Nagelstreifen nach Anspruch 1 oder 2, **dadurch gekennzeichnet, dass** die Verbindungselemente der Nägel (10) sich in Richtung zu einer Spitze (16) des jeweiligen Nagels (10) hin verjüngen, insbesondere so weit, dass sie an ihren der jeweiligen Spitze (16) zugewandten Enden nicht über einen angrenzenden Querschnitt des jeweiligen Nagels (10) überstehen.

4. Nagelstreifen nach einem der Ansprüche 1 bis 3, **dadurch gekennzeichnet, dass** die Verbindungselemente der Nägel (10) dazu ausgebildet sind, paarweise mit einer parallel zu den Längsachsen (12) der Nägel (10) ausgerichteten Bewegung zusammengesteckt oder zusammengeschoben zu werden.

5. Nagelstreifen nach einem der Ansprüche 1 bis 4, **dadurch gekennzeichnet, dass** die Nägel (10) Anschlagflächen (40, 48) aufweisen, die eine zum Verbinden benachbarter Nägel (10) auszuführende Bewegung derart begrenzen, dass die vorderen Enden der Nägel (10) auf einer Geraden (18) angeordnet sind.

6. Nagelstreifen nach Anspruch 5, **dadurch gekennzeichnet, dass** die Gerade (18) einen Winkel im Bereich von 45° bis 89° zu den Längsachsen (12) der Nägel (10) aufweist.

7. Nagelstreifen nach einem der Ansprüche 1 bis 6, **dadurch gekennzeichnet, dass** der Nagelstreifen einen gesonderten Nagelstreifenverbinder aufweist, der sich über alle Nägel (10) des Nagelstreifens erstreckt, und die Verbindungselemente der Nägel (10) dazu ausgebildet sind, jeden Nagel (10) mit dem Nagelstreifenverbinder zu verbinden.

8. Nagelstreifen nach Anspruch 7, **dadurch gekennzeichnet, dass** der Nagelstreifenverbinder einen Griffabschnitt (68) aufweist, an dem der Nagelstreifenverbinder aus dem Nagelstreifen herausgezogen werden kann.

9. Nagelstreifen nach Anspruch 7 oder 8, **dadurch gekennzeichnet, dass** der Nagelstreifenverbinder ein Papier-, Papp-, Textil- oder Kunststoffstreifen (64), ein Faden oder ein Draht ist.

10. Nagelstreifen nach einem der Ansprüche 7 bis 9, **dadurch gekennzeichnet, dass** jeder Nagel (10) als Verbindungselement eine Durchgangsöffnung (74) aufweist, die auf den Nagelstreifenverbinder auffädelbar ist.

11. Nagelstreifen nach einem der Ansprüche 7 bis 9, **dadurch gekennzeichnet, dass** jeder Nagel (10) als Verbindungselemente mehrere Aussparungen aufweist und der Nagelstreifenverbinder mehrere Arme, die mit den Aussparungen zusammenwirken.

12. Nagelstreifen nach einem der Ansprüche 7 bis 11, **dadurch gekennzeichnet, dass** die Verbindungselemente der Nägel (10) bügel- oder clipförmig sind.

13. Nagelstreifen nach einem der Ansprüche 2 bis 11, **dadurch gekennzeichnet, dass** die Nägel jeweils einen Grundkörper mit einer Aufnahme für den RFID-Transponder (34) aufweisen und dass die Verbindungselemente der Nägel (10) an dem Grundkörper ausgebildet sind.

14. Nagelstreifen nach einem der Ansprüche 1 bis 13, **dadurch gekennzeichnet, dass** die RFID-Transponder (34) einen wiederbeschreibbaren Speicher aufweisen.

15. Verfahren zur Herstellung eines Nagelstreifens nach einem der Ansprüche 1 bis 14, der zur Verarbeitung mit einem Eintreibwerkzeug bestimmt ist, wobei das Verfahren die folgenden Schritte umfasst:
• Bereitstellen einer Vielzahl von Nägeln (10), die jeweils mit einem RFID-Transponder (34) versehen sind,
• Prüfen der mit den RFID-Transpondern (34) versehenen Nägel (10) auf die Funktionsfähigkeit der RFID-Transponder (34) hin,
• Auswählen derjenigen Nägel (10), die einen funktionsfähigen RFID-Transponder (34) aufweisen, und
• Verbinden der ausgewählten Nägel (10) miteinander mit Verbindungsmitteln zu dem Nagelstreifen.

## Claims

1. Nail strip, which is intended to be processed with a driving tool and comprises the following:
• a multiplicity of nails (10), each of which is provided with an RFID transponder (34), and
• connecting means for connecting the nails (10) to the nail strip, wherein
• the connecting means are configured to establish the connection of the nails (10) to the nail strip after the nails (10) provided with the RFID transponders (34) have been checked for the functionality of the RFID transponders (34) and those nails (10) that have a functional RFID transponder (34) have been selected, and wherein
• the connecting means comprise a multiplicity of connecting elements, of which each nail (10) has at least one, **characterised in that**
• each nail (10) has a dovetailed pin (36) and a complementarily shaped groove (38) as connecting elements.

2. Nail strip according to Claim 1, **characterised in that** the connecting elements of the nails (10) are configured to connect neighbouring nails (10) directly to one other in pairs.

3. Nail strip according to Claim 1 or 2, **characterised in that** the connecting elements of the nails (10) taper in the direction of a tip (16) of the respective nail (10), in particular to an extent such that they do not protrude beyond an adjacent cross section of the respective nail (10) at their ends facing towards the respective tip (16).

4. Nail strip according to any one of Claims 1 to 3, **characterised in that** the connecting elements of the nails (10) are configured to be plugged together or pushed together in pairs by a movement aligned parallel to the longitudinal axes (12) of the nails (10).

5. Nail strip according to any one of Claims 1 to 4, **characterised in that** the nails (10) have stop surfaces (40, 48), which limit a movement to be performed in order to connect neighbouring nails (10) in such a way that the front ends of the nails (10) are arranged on a straight line (18).

6. Nail strip according to Claim 5, **characterised in that** the straight line (18) has an angle in the range of 45° to 89° with respect to the longitudinal axes (12) of the nails (10).

7. Nail strip according to any one of Claims 1 to 6, **characterised in that** the nail strip has a separate nail strip connector, which extends over all nails (10) of the nail strip, and the connecting elements of the nails (10) are configured to connect each nail (10) to the nail strip connector.

8. Nail strip according to Claim 7, **characterised in that** the nail strip connector has a handle section (68) on which the nail strip connector can be pulled out of the nail strip.

9. Nail strip according to Claim 7 or 8, **characterised in that** the nail strip connector is a paper, cardboard, textile or plastic strip (64), a thread or a wire.

10. Nail strip according to one of Claims 7 to 9, **characterised in that** each nail (10) has a through-opening (74) as a connecting element, which can be threaded onto the nail strip connector.

11. Nail strip according to any one of Claims 7 to 9, **characterised in that** each nail (10) has a plurality of recesses as connecting elements and the nail strip connector has a plurality of arms, which cooperate with the recesses.

12. Nail strip according to any one of Claims 7 to 11, **characterised in that** the connecting elements of the nails (10) are stirrup-shaped or clip-shaped.

13. Nail strip according to one of Claims 2 to 11, **characterised in that** the nails each have a base body with a holder for the RFID transponder (34), and **in that** the connecting elements of the nails (10) are formed on the base body.

14. Nail strip according to any one of Claims 1 to 13, **characterised in that** the RFID transponders (34) have a rewritable memory.

15. Method for producing a nail strip according to any one of Claims 1 to 14, which is intended for processing with a driving tool, wherein the method comprises the following steps:
• providing a multiplicity of nails (10), each of which is provided with an RFID transponder (34),
• checking the nails (10) provided with the RFID transponders (34) for the functionality of the RFID transponders (34),
• selecting those nails (10) that have a functional RFID transponder (34), and
• connecting the selected nails (10) to one other with connecting means to form the nail strip.

## Revendications

1. Bande de clous destinée à être utilisée avec une outil d'enfoncement et comportant ce qui suit :
• une pluralité de clous (10), chacun étant pourvu d'un transpondeur RFID (34), et
• des moyens de liaison pour relier les clous (10) à la bande de clous,
• les moyens de liaison étant conçus pour permettre l'établissement de la liaison entre les clous (10) et la bande de clous après que les clous (10), munis des transpondeurs RFID (34), aient été vérifiés quant au bon fonctionnement des transpondeurs RFID (34) et que seuls les clous (10) ayant un transpondeur RFID (34) fonctionnel aient été sélectionnés, et
• les moyens de liaison comprenant une pluralité d'éléments de liaison dont chaque clou (10) en présente au moins un, **caractérisé en ce que**
• chaque clou (10) présente en tant qu'éléments de liaison un tenon en forme de queue d'aronde (36) et une rainure (38) de forme complémentaire.

2. Bande de clous selon la revendication 1, **caractérisée en ce que** les éléments de liaison des clous (10) sont conçus pour relier directement entre eux par paires des clous (10) adjacents.

3. Bande de clous selon la revendication 1 ou 2, **caractérisée en ce que** les éléments de liaison des clous (10) se rétrécissent en direction d'une pointe (16) du clou (10) respectif, notamment jusqu'à ce qu'ils ne dépassent pas, au niveau de leurs extrémités orientées vers la pointe (16) respective, une section transversale adjacente du clou (10) respectif.

4. Bande de clous selon l'une quelconque des revendications 1 à 3, **caractérisée en ce que** les éléments de liaison des clous (10) sont conçus pour être assemblés par emboîtement ou rapprochés par paires avec un mouvement parallèle aux axes longitudinaux (12) des clous (10).

5. Bande de clous selon l'une quelconque des revendications 1 à 4, **caractérisée en ce que** les clous (10) présentent des surfaces de butée (40, 48) limitant un mouvement à effectuer pour relier des clous (10) adjacents de manière à ce que les extrémités avant des clous (10) soient agencées sur une ligne droite (18).

6. Bande de clous selon la revendication 5, **caractérisée en ce que** la ligne droite (18) présente un angle si situant dans une plage de 45° à 89° par rapport aux axes longitudinaux (12) des clous (10).

7. Bande de clous selon l'une quelconque des revendications 1 à 6, **caractérisée en ce que** la bande de clous présente un connecteur de bande de clous séparé qui s'étend sur tous les clous (10) de la bande de clous, et les éléments de liaison des clous (10) sont conçus pour relier chaque clous (10) au connecteur de bande de clous.

8. Bande de clous selon la revendication 7, **caractérisée en ce que** le connecteur de bande de clous présente une section de poignée (68) par laquelle le connecteur de bande de clous peut être retiré de la bande de clous.

9. Bande de clous selon la revendication 7 ou 8, **caractérisée en ce que** le connecteur de bande de clous est une bande de papier, de carton, de textile ou de plastique (64), un fil ou un fil métallique.

10. Bande de clous selon l'une quelconque des revendications 7 à 9, **caractérisée en ce que** chaque clou (10) présente, en tant qu'élément de liaison, une ouverture de passage (74) qui peut être enfilée sur le connecteur de bande de clous.

11. Bande de clous selon l'une quelconque des revendications 7 à 9, **caractérisée en ce que** chaque clou (10) présente, en tant qu'éléments de liaison, plusieurs évidements et le connecteur de bande de clous plusieurs bras qui interagissent avec les évidements.

12. Bande de clous selon l'une quelconque des revendications 7 à 11, **caractérisée en ce que** les éléments de liaison des clous (10) sont en forme d'étrier ou de clip.

13. Bande de clous selon l'une quelconque des revendications 2 à 11, **caractérisée en ce que** les clous présentent chacun un corps de base avec un logement pour le transpondeur RFID (34) et **en ce que** les éléments de liaison des clous (10) sont conçus sur le corps de base.

14. Bande de clous selon l'une quelconque des revendications 1 à 13, **caractérisée en ce que** les transpondeurs RFID (34) présentent une mémoire réinscriptible.

15. Procédé de fabrication d'une bande de clous selon l'une quelconque des revendications 1 à 14, destinée au traitement à l'aide d'un outil d'enfoncement, le procédé comprenant les étapes suivantes :
• la mise à disposition d'une pluralité de clous (10), chacun étant pourvu d'un transpondeur RFID (34),
• la vérification des clous (10) munis de transpondeurs RFID (34) pour s'assurer du bon fonctionnement des transpondeurs RFID (34),
• la sélection des clous (10) qui présentent un transpondeur RFID (34) fonctionnel, et
• la liaison des clous sélectionnés (10) entre eux à l'aide d'éléments de liaison pour former la bande de clous.
